# EUROPÄISCHE PATENTSCHRIFT

(11) **EP 0 873 681 B1**
(45) Veröffentlichungstag und Bekanntmachung des Hinweises auf die Patenterteilung: **07.11.2001**
(21) Anmeldenummer: 98107199.6
(22) Anmeldetag: 21.04.1998
(51) Int. Cl.: A01G 17/02, A01G 3/04

(54) **Rebenbearbeitungseinrichtung**
Grape-vine working device
Dispositif de traitement de la vigne

(30) Priorität: 24.04.1997 DE 19717198
(43) Veröffentlichungstag der Anmeldung: 28.10.1998
(73) Patentinhaber: Rinklin, Willi, 79427 Eschbach (DE)
(72) Erfinder: Rinklin, Willi, 79427 Eschbach (DE)
(74) Vertreter: Patent- und Rechtsanwaltssozietät, Maucher, Börjes & Kollegen

(56) Entgegenhaltungen:
- EP-A- 0 230 156
- EP-A- 0 812 533
- DE-U- 9 109 425
- FR-A- 2 230 285
- FR-A- 2 494 081
- FR-A- 2 752 360

## Beschreibung

Die Erfindung bezieht sich auf eine Rebenbearbeitungseinrichtung, die als Anbaugerät an einem Trägerfahrzeug mittels eines galgenförmigen Auslegers anbringbar ist und einen mit dem Trägerfahrzeug verbindbaren Trägerrahmen aufweist, der mit seiner Rahmenebene quer zur Fahrtrichtung des Trägerfahrzeugs verläuft und Seitenschenkel hat, welche die zu bearbeitende Rebzeile zumindest bereichsweise übergreifen, wobei der Trägerrahmen und der Ausleger als Basisgerät zum lösbaren Anbringen von Ausbaugeräten mit unterschiedlichen Bearbeitungsfunktionen ausgebildet sind und mit zumindest einer, ein Ausbaugerät bildenden Aufnahme- und Aufrichteinrichtung mit angetriebenen Fördermitteln zum Aufrichten der Rebtriebe, wobei die Aufnahme- und Aufrichteinrichtung einen an die Fahrgeschwindigkeit des Trägerfahrzeugs anpaßbaren und einstellbaren Antrieb aufweist.

Rebenbearbeitungseinrichtungen sind in unterschiedlichen Ausführungsformen bereits bekannt. So kennt man beispielsweise aus der DE 35 46 445.3-23 eine Einrichtung zum Vorschnitt von Rebholz mit in die Rebzeile eingreifenden, etwa in horizontaler Richtung schneidenden Messern. Mit dieser zum Kordonschnitt vorgesehenen Einrichtung kann das Rebholz geschnitten und zerkleinert werden. Weiterhin kennt man aus dem Gebrauchsmuster G 72 19 735.4 ein Laub-Schneidegerät, mit dem die Außenseiten der Rebzeile beschnitten werden können. Dieses Schneidgerät arbeitet mit einer Heckenschere, die einen Messerbalken mit einer Länge etwa entsprechend der Höhe der zu bearbeitenden Laubwand hat.
Um Probleme bei schrägstehenden Ranken, die von einem Messerbalken schlecht erfaßt oder beiseite gedrückt werden können oder bei zu starken Ranken, die den Messerbalken blockieren können, zu vermeiden, sind Schneidvorrichtungen entwickelt worden, die mit mehreren Messerscheiben arbeiten. Eine solche Einrichtung ist beispielsweise aus der DE-OS 20 37 293 bekannt.
Aus der FR 22 30 285 ist ein Anbaugerät zum seitlichen Rebenschneiden und zum Entgipfeln bekannt, das an ein Trägerfahrzeug mittels eines galgenförmigen Auslegers und einem daran aufgehängten Trägerrahmen anbringbar ist.
Mit den vorgenannten Geräten können die im Rebbau notwendigen, unterschiedlichen Arbeiten rationalisiert werden.
Nachteilig ist hierbei jedoch, daß durch den vergleichsweise großen Gerätepark entsprechende Kosten anfallen, die von kleineren Winzerbetrieben nicht getragen werden können.

Eine weitere Rebenbearbeitungseinrichtung ist aus der US 4 989 365 bekannt. Es handelt sich hierbei um eine Vorrichtung zum Aufrichten und Aufheften von Rebtrieben mit Hilfe von längs gespannten Drähten. Das Aufrichten der Rebtriebe erfolgt durch das Anheben der zunächst am Boden oder bodennah liegenden Drähte in eine vorgegebene Höhe. Die Drähte werden dann in bestimmten Abständen zusammengeheftet. Auch aus der DE-PS 2 426 612 ist eine Rebenbearbeitungseinrichtung bekannt, mit der Rebtriebe aufgerichtet und aufgeheftet werden können. Die mit der Zeit kreuz und quer wachsenden Rebtriebe werden dabei nach oben aufgerichtet und durch beidseits neben der Rebzeile gespannte Fäden, die in bestimmten Abständen zusammengeheftet werden, in dieser aufgerichteten Lage fixiert.

Insgesamt sind solche Aufhefteinrichtungen aufwendig und teuer und insbesondere auch nicht gleich gut für unterschiedliche Reben beziehungsweise unterschiedliche Anforderungen einsetzbar.
Nachteilig ist weiterhin, daß bei Einsatz von angetriebenen Aufrichteinrichtungen, das Arbeitsergebnis häufig ungleichmäßig ist, da die Fahrgeschwindigkeit des Trägerfahrzeugs in Hanglagen oder bei gleichzeitigem Einsatz von anderen Bearbeitungsgeräten, zum Beispiel eines Mulchgerätes nicht konstant gehalten werden kann oder aber, weil die Triebe durch Winddruck in eine Richtung gedrückt sind und daher bei unterschiedlichen Fahrrichtungen entsprechend unterschiedlich bearbeitet werden müssen.

Aus der FR 2 418 622 A1 ist ein Rebenbearbeitungsgerät bekannt, welches eine mit Förderschnecken arbeitende Aufnahme- und Aufrichteinrichtung zum Aufrichten der Rebtriebe aufweist. Die Förderschnecken werden durch Hydraulikmotoren angetrieben. Die Rotationsgeschwindigkeit der Schnecken ist mit Hilfe eines einstellbaren Sollwertreglers verstellbar.
Dabei kann die Drehzahl so eingestellt werden, daß die Rebtriebe etwa vertikal gerichtet werden, wenn auch die Fahrgeschwindigkeit des Trägerfahrzeuges passend zu dieser Rotationsgeschwindigkeit der Schnecken konstant gehalten wird. In der Praxis kann jedoch die Fahrgeschwindigkeit wegen äußerer Umstände nicht konstant gehalten werden, so daß die Drehzahl der Förderschnecken von dem Bediener laufend nachgestellt und der Fahrgeschwindigkeit angepaßt werden muß, was aber nur schwierig erreichbar ist, weil dies neben der Bedienung des Trägerfahrzeuges - lenken, kuppeln, gasgeben, bremsen - und des Hydrauliksteuergerätes, mit dem die Höhenlage und Seitenneigung des Anbaugerätes laufend eingestellt wird, erfolgen muß. Diese Vielzahl von gleichzeitig durchzuführenden Bedienungsvorgängen können schnell zu mangelhaften Einzelbedienungen führen, so daß dann ein schlechtes Arbeitsergebnis oder sogar Störungen und Beschädigungen auftreten können.
Wenn das Verhältnis zwischen Fahrgeschwindigkeit des Trägerfahrzeuges und Arbeitsgeschwindigkeit der Aufnahme- und Aufrichteinrichtung nicht übereinstimmt, so führt dies zu einem nicht akzeptablen Arbeitsergebnis, bei dem die Rebstöcke sogar beschädigt werden können. Insbesondere kann eine zur Fahrgeschwindigkeit unpassende Arbeitsgeschwindigkeit der Aufnahme- und Aufrichteinrichtung dazu führen, daß die Rebtriebe nicht ausreichend aufgerichtet oder auf die andere Seite umgelegt werden und darüberhinaus besteht auch die Gefahr, daß insbesondere beim Einfahren in eine Rebzeile eine Verkeilen der Triebe und der Aufnahme- und Aufrichteinrichtung auftritt und dadurch Betriebsstörungen hervorgerufen werden können.

Aus der DE 91 09 425 ist ein Bearbeitungsgerät zum seitlichen Spannen von etwa vertikalen Rankdrähten im Hopfenbau bekannt. Diese weist eine mit einem Traktor verbundene Schutzvorrichtung mit einem über Umlenkrollen umlaufenden, angetriebenen Endloskörper auf, der durch eine Kette oder einen Riemen gebildet sein kann und dessen Umlaufbahn in einer etwa horizontalen Ebene liegt. Der Endloskörper weist eine Vielzahl von borstenartigen, elastischen Mitnehmern auf, die in die Hopfenreben eingreifen. Die Umlaufgeschwindigkeit des Endloskörpers wird so eingestellt, daß beim Entlangfahren an den Hopfenreihen diese in ihren Durchhang hineingezogen und damit in eine definierte Lage gebracht werden. Auch hierbei muß die Fahrgeschwindigkeit an die Umlaufgeschwindigkeit des Endloskörpers angepaßt sein. Für ein Rebenbearbeitung und dabei für ein Aufnehmen und Aufrichten von Rebtrieben ist dieses Gerät ungeeignet.

Aufgabe der vorliegenden Erfindung ist es, eine Rebenbearbeitungseinrichtung zu schaffen, die kostengünstig ist und bedarfsweise für unterschiedliche Rebenarten oder bei unterschiedlichen Anforderungen anpaßbar ist und mit der insbesondere ein gleichmäßiges Aufrichten der Rebtriebe möglich sein.

Zur Lösung dieser Aufgabe wird für eine erste Ausführungsform der Erfindung vorgeschlagen, daß die Steuerung der Fördergeschwindigkeit der Aufnahme- und Aufrichteinrichtung proportional zur Fahrgeschwindigkeit des Trägerfahrzeugs mit einem Steuergerät erfolgt.

Der Antrieb der Aufnahme- und Aufrichteinrichtung ist dabei mit der Steuerung verbunden und wird mit Hilfe des Steuergerätes in Abhängigkeit von der Fahrgeschwindigkeit des Trägerfahrzeuges so angesteuert, daß die Fördergeschwindigkeit automatisch an die Fahrgeschwindigkeit angepaßt wird. Die Arbeitsgeschwindigkeit der Aufnahme- und Aufrichteinrichtung ist somit proportional an die Fahrgeschwindigkeit des Trägerfahrzeuges gekoppelt, so daß sich dadurch in erwünschter Weise Fahrgeschwindigkeitsänderungen proportional auf die Arbeitsgeschwindigkeit auswirken.
Der Fahrer des Trägerfahrzeuges ist durch diese automatische Anpassung wesentlich entlastet und kann sich auf die übrigen Bedienfunktionen konzentieren.

Die Fördergeschwindigkeit der Fördermittel und die Fahrgeschwindigkeit sind dabei so aufeinander abgestimmt, daß die Rebtriebe während der Erfassungszeit durch die Fördermittel aufgenommen und in eine etwa vertikale Lage gebracht werden, in der die Fördermittel dann wieder außer Eingriff kommen. Durch den geschwindigkeitsproportionalen Antrieb der Fördermittel kann die Fahrgeschwindigkeit des Trägerfahrzeugs variiert werden, ohne das Arbeitsergebnis nachteilig zu beeinflussen.
Gelegentlich werden gleichzeitig mit der Bearbeitung der Rebzeile auch Bodenbearbeitungen vorgenommen, beispielsweise mit einem zusätzlich am Schlepper angebrachten Mulchgerät. Hierbei ist es ab und zu erforderlich, Korrekturen beim Fahren vorzunehmen oder auch anzuhalten. Auch dies kann problemlos erfolgen, da bei der etwa Fahrgeschwindigkeits-synchron arbeitenden Aufnahme - und Aufrichteinrichtung Störungen durch unkontrolliertes Umlegen der Rebtriebe, bedingt durch Fahrgeschwindigkeitsänderungen, nicht auftreten können.
Bedarfsweise kann das Verhältnis zwischen der Fahrgeschwindigkeit und der Fördergeschwindigkeit an bestimmte Gegebenheiten angepaßt werden, indem der Proportionalitätsfaktor manuell eingestellt wird. Dadurch können beispielsweise durch Winddruck in oder entgegen der Fahrtrichtung weisende Rebtriebe unabhängig von der Fahrtrichtung in eine exakt vertikale Position gebracht werden.

Eine Ausführungsform der Erfindung von selbständiger Bedeutung sieht bei einer Einrichtung gemäß Oberbegriff von Anspruch 1 mit einem zusätzlichen Ausbaugerät, welches ein Klammergerät zum Zusammenheften von parallel nebeneinander verlegten Schnüren sowie eine Abwickeleinrichtung für die Schnüre oder dergleichen Zugelementen aufweist, die beim Aufheften der Rebtriebe mittels der Aufnahme- und Aufrichteinrichtung beidseits längs der Rebzeile verlegt werden und dabei mit einem Ende an einem Ende der Rebzeile befestigt sind, vor, daß die Steuerung der Fördergeschwindigkeit der Aufnahme- und Aufrichteinrichtung proportional zur Fahrtgeschwindigkeit des Trägerfahrzeugs mit der Schnur-Abwickeleinrichtung erfolgt, die den Antrieb für die Fördermittel der Aufnahme- und Aufrichteinrichtung bildet.
Auch hierbei wirken sich durch den Fahrgeschwindigkeits-proportionalen Antrieb der Fördermittel mittels der Schnur-Abwickeleinrichtung, Änderungen der Fahrgeschwindigkeit des Trägerfahrzeugs nicht nachteilig auf das Arbeitsergebnis aus, da die Fördergeschwindigkeit der Aufnahme- und Aufrichteinrichtung proportional dazu mit geändert wird.
Die von der Aufnahme- und Aufrichteinrichtung aufgerichteten Rebtriebe werden hierbei durch die beidseitig verlaufenden Schnüre gehalten. Die Schnüre werden in bestimmten Abständen zusammengeheftet. Dies kann manuell oder mit dem als Ausbaugerät am Basisgerät anbringbaren Klammergerät erfolgen.
Der Antrieb für die Fördermittel durch die beim Aufheften beidseitig längs der Rebzeile verlegten Schnüre oder dergleichen Zugelemente ergibt auf besonders einfache Weise einen Fahrgeschwindigkeits-synchronen Antrieb der Fördermittel. Separate Antriebe für die Fördermittel mit entsprechender Steuereinrichtung zur Anpassung an die Fahrgeschwindigkeit sind somit nicht erforderlich.

Bei der Rebenbearbeitungseinrichtung nach Anspruch 1 können als motorische Antriebe für die Aufnahme- und Aufrichteinrichtung motorische Antriebe, insbesondere Elektromotoren oder Hydraulikmotoren vorgesehen sein, die mit einer Steuerung für eine Fördergeschwindigkeit der Aufnahme- und Aufrichteinrichtung etwa proportional zur Fahrtgeschwindigkeit verbunden sind.
Bei bestimmten Aufnahme- und Aufrichteinrichtungen, die auch für sehr starkwüchsige Reben oder aber auch Reben in einem fortgeschrittenen Wuchsstadium geeignet sind, ist ein erhöhtes Antriebsmomentes erforderlich, so daß es in diesem Fall zweckmäßig ist, motorische Antriebe, zum Beispiel Hydraulikmotoren oder Elektromotoren für die Fördermittel einzusetzen.

Eine Ausführungsform der Erfindung sieht vor, daß die Aufnahmeund Aufrichteinrichtung gegenüberliegend an den beiden Seitenschenkeln des Trägerrahmens lösbar anbringbare und drehbar gelagerte Tellerräder mit am Außenumfang befindlicher Zahnung oder dergleichen Mitnehmer aufweist, deren Tellerebenen schräg zueinander mit in Fahrtrichtung des Trägerfahrzeuges sowie nach oben sich verkleinerndem Tellerebenen-Abstand angeordnet sind.
Diese Aufnahme- und Aufrichteinrichtung mit zum Beispiel zwei Tellerrädern ist einfach im Aufbau und auch vergleichsweise leicht. Sie kann somit auch an kleineren Trägerfahrzeugen verwendet werden. Die Zahnungen oder Mitnehmer an den Außenumfängen der Tellerräder sind so ausgebildet, daß Mitnehmerkammern gebildet sind, die zur Aufnahme eines Rebtriebes bemessen sind und diesen erfassen und durch die Drehung der Tellerräder und deren Schrägstellung die Rebtriebe aufrichten. Die spezielle Lage und Schrägstellung der Tellerräder bewirkt auch, daß sie bei etwa vertikal aufgerichteten Rebtrieben außer Eingriff mit diesen Rebtrieben kommen und somit die Triebe in der vorgesehenen, vertikalen Ausrichtlage wieder freigeben.

Zweckmäßig und einfach ist es, wenn die Tellerräder für einen Fahrgeschwindigkeits-synchronen Antrieb jeweils zu ihrer Zahnung oder dergleichen nach innen zurückversetzte Schnurrillen aufweisen, welche von den beim Aufheften zu verlegenden Schnüren zumindest teilweise umschlungen sind. Auf einfache Weise ist dadurch ein Fahrgeschwindigkeits- synchroner Antrieb der Tellerräder vorhanden.

Die Aufnahme- und Aufrichteinrichtung kann wahlweise auch gegenüberliegend an den beiden Seitenschenkeln des Trägerrahmens lösbar anbringbare, schräg nach oben verlaufende und in diese Richtung transportierende Förderschnecken aufweist, deren Schneckenwindungen derart beabstandet sind, daß unter Berücksichtigung der Schräglage der Förderschnecke zwischen den Schneckenwindungen in etwa vertikaler Richtung ein lichter Durchtritt für aufzurichtende Triebe vorhanden ist und daß der Windungsabstand vorzugsweise mehr als 125mm, z.B.180mm bei einer Schräglage der Förderschnecken von etwa 50° bis etwa 60° beträgt.
Eine solche Aufnahme- und Aufrichteinrichtung ist auch für sehr starkwüchsige Reben oder aber auch für Reben in einem fortgeschrittenen Wuchsstadium geeignet. Durch die vorgesehenen Abstände zwischen den Schneckenwindungen ist sichergestellt, daß die einzelnen Triebe sicher erfaßt und dann in eine etwa vertikale Lage aufgerichtet werden.
Eine vorteilhafte Ausgestaltung der vorgenannten Ausführungsform einer Aufnahme- und Aufrichteinrichtung sieht vor, daß am oberen Ende der Förderschnecken Kupplungsstellen für dort ankuppelbare Förderschnecken-Verlängerungen vorgesehen sind, die sich bis hinter den Trägerrahmen erstrecken und daß die Förderschnecken-Verlängerungen vorzugsweise in einem flacherem Winkel angeordnet sind als die übrige Förderschnecke und daß bei der Kupplungsstelle insbesondere Kreuzgelenke für die Antriebsübertragung vorgesehen sind.
Die Förderschnecken können an den Seitenschenkeln des Trägerrahmens zwar höhenverstellt werden, so daß eine Anpassung an die Lage der jeweils aufzurichtenden Rebtriebe vorgenommen werden kann, in einigen Fällen ist es jedoch erforderlich, eine besonders lange Förderstrecke zur Verfügung zu haben. Für diesen Anwendungsfall können die Förderschnecken an ihren oberen Enden mit den vorgesehenen Verlängerungen verlängert werden, so daß die Triebe einerseits am unteren Ende sicher erfaßt, andererseits aber auch bis in eine tatsächlich vertikale Lage aufgerichtet werden. Außerdem wird damit erreicht, daß die Triebe in eine günstige Schnittposition für den Entgipfler gebracht werden. Bei langen Trieben besteht nämlich die Gefahr, daß diese mit ihren Enden an Trägerrahmenteilen oder dergleichen hängenbleiben und dann nicht in den Arbeitsbereich des Entgipflers gelangen. Durch die nach oben bzw. hinten verstellten Förderschnecken bzw. durch die bedarfsweise an den oberen Enden angekuppelten Förderschnecken-Verlängerungen werden die Rebtriebe tatsächlich auch sicher bis in den Bereich des Entgipflers transportiert und dort abgeschnitten. In Kombination mit einem Klammergerät zum Zusammenheften von nebeneinander verlegten Schnüren ist die Förderstrecke im oberen Bereich der Förderschnecke so bemessen, daß eine Führung der Rebtriebe über die Heftstelle hinaus erfolgt, um sicherzustellen, daß die Rebtriebe dem Entgipfler in einer vertikalen Schneidposition zugeführt werden.

Gegebenenfalls kann die Förderschnecken-Verlängerung mit einer höheren Antriebsdrehzahl als die dieser zufördernde Förderschnecke arbeiten, wobei vorzugsweise die Antriebsübertragung zwischen Förderschnecke und Förderschnecken-Verlängerung eine Übersetzung aufweist.
Durch diese Maßnahme wird erreicht, daß auf kurzer Förderstrecke ein Geradeausrichten der zugeförderten Triebe in vertikale Lage erfolgt. Auch dadurch wird begünstigt, daß die Rebtriebe bis in eine vertikale Lage gebracht und in dieser festgeheftet und erst dann freigegeben werden um durch das nachfolgende Gipfelgerät abgeschnitten zu werden.
Eine weitere, mögliche Ausführungsform einer Aufnahme- und Aufrichteinrichtung sieht vor, daß die Aufnahme- und Aufrichteinrichtung gegenüberliegend an den beiden Seitenschenkeln des Trägerrahmens lösbar anbringbare, schräg nach oben verlaufende und in diese Richtung transportierende, vorzugsweise durch Keilriemen gebildete Förderriemen aufweist, die über Umlenkriemenscheiben geführt sind und daß die Förderriemen außenseitig Mitnehmervorsprünge beispielsweise in Form von Noppen, Stäben und dergleichen aufweisen. Mit diesen Aufnahme- und Aufrichteinrichtungen können insbesondere auch Reben mit empfindlichen Trieben aufgerichtet werden.
Diese Aufnahme- und Aufrichteinrichtung weist einen besonders einfachen, kostengünstigen Aufbau auf und es ist damit auch bei geringem Gewicht ein vergleichsweise langer Förderweg für die Rebtriebe realisierbar. Durch das geringe Gewicht eignet sich diese Einrichtung auch gut für kleinere Trägerfahrzeuge. Dies wird auch begünstigt durch die Möglichkeit, hier als Antrieb die beim Aufheften längs der Rebzeile zu verlegenden Schnüre zu verwenden, um eine Fahrgeschwindigkeits-synchrone Arbeitsgeschwindigkeit der Fördermittel (Förderriemen) zu erreichen.
Vorteilhafterweise sind die Umlenkriemenscheiben jeweils eines Förderriemens aus einer miteinander fluchtenden Lage verstellbar, wobei insbesondere die oberen, seitlich benachbarten Umlenkriemenscheiben in ihrer Schräglage zueinander verstellbar sind.
Dadurch besteht die Möglichkeit, innerhalb des Transportweges eine "Verwindung" der Förderriemen einzustellen und damit eine Anpassung an die jeweils vorhandenen Verhältnisse zur Erzielung optimaler Förderverhältnisse vornehmen zu können.
Eine vorteilhafte Ausgestaltung sieht vor, daß der innenseitig jeweils von dem Förderriemen und den Umlenkriemenscheiben umgrenzte Zwischenraum vorzugsweise durch ein Leitblech im wesentlichen ausgefüllt ist, das an seiner dem inneren Riementrum zugewandten Seite als Auflageführung für den Förderriemen ausgebildet ist und das an der gegenüberliegenden Seite das andere Riementrum umgreift. Dadurch wird verhindert, daß gegebenenfalls an dem Fördertrump des Förderriemens abgerutschte Triebe zwischen Förderriemen und Umlenkriemenscheibe gelangen können. Das Leitblech dient somit einerseits als Abweiser für die aufzurichtenden Rebtriebe und bildet auch noch eine Seitenanlage, durch die Querbelastungen der Förderiemen vermieden werden.

Bei einer Rebenbearbeitungseinrichtung, die zum Zusammenheften von parallel nebeneinander verlegten Schnüre oder dergleichen ein Klammergerät aufweist, sind gegenüberliegend an den beiden Seitenschenkeln des Trägerrahmens lösbar anbringbare Klammerschenkel vorgesehen, wobei beim Heftkopf eine vom Stirnende des Klammerschenkels her zugängliche Nachladeöffnung für Klammern vorgesehen ist und daß bei dieser Nachladeöffnung ein Verschlußschieber angeordnet ist, der in Schließstellung einen Anschlag für unter Vorspannug stehende, in einem der Seitenschenkel magazinierte Klammern bildet.
Das Klammergerät bildet somit ebenfalls ein bedarfsweise am Basisgerät anbringbares Ausbaugerät. Die Zugänglichkeit des Kammermagazins von der Stirnseite her beim Heftkopf erleichtert das Nachladen mit Klammern erheblich und es wird dadurch vermieden, daß bei Fehlfunktionen des Klammermechanismus der Bediener durch Einklemmen der Finger verletzt wird. Diese Gefahr besteht bei Klammergeräten, die von der Seite her zwischen Trägerrahmen beziehungsweise Halteteilen nachgeladen werden müssen.
Vorteilhaft ist es, wenn die Abwickeleinrichtung zum Abspulen von etwa parallel nebeneinander beabstandeten Schnüren, Fäden oder dergleichen eine Kontrolleinrichtung zur Überwachung der Schnuroder Garnrollen aufweist und wenn dazu vorzugsweise Sichtfenster bei einem Aufnahmekasten für die Schnur- oder Garnrollen vorgesehen sind.
Die Sichtfenster befinden sich dabei im Blickfeld des Fahrers, für den somit laufend erkennbar ist, inwieweit die Garnrollen abgearbeitet sind. So kann rechtzeitig vor Ablaufen einer Garnrolle eine nächste angeknüpft werden. Umständliche und zeitaufwendige Spann- und Einfädelarbeiten werden dadurch vermieden. Gerade in Verbindung mit einem über die Schnüre erfolgenden Antrieb der Fördermittel ist eine solche Kontrollmöglichkeit von erheblicher Bedeutung, weil dadurch auch Beschädigungen der Reben vermieden werden können.
Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine Vorderseitenansicht einer Rebenbearbeitungseinrichtung mit einer schematisch eingezeichneten Aufnahmeund Aufrichteinrichtung zum Aufrichten von Rebtrieben, die an ein Trägerfahrzeug angebracht ist,
- Fig. 2: eine etwa Figur 1 entsprechende Darstellung, hier jedoch mit einer anderen Ausführungsform einer Aufnahme- und Aufrichteinrichtung zum Aufrichten von Rebtrieben,
- Fig. 3: eine etwa Figur 1 und 2 entsprechende Darstellung, hier jedoch mit einem Klammergerät zum Zusammenheften von parallel nebeneinander verlegten Schnüren,
- Fig. 4: eine andere Ausführungsform der in Figur 1 und 2 gezeigten Aufnahme- und Aufrichteinrichtung mit Förderschnecken,
- Fig. 5: eine vordere Stirnseitenansicht eines zu einem Klammergerät gehörenden Klammerschenkels mit Nachladeöffnung für Klammern,
- Fig. 6: eine teilweise im Schnitt gehaltene Seitenansicht eines das Klammermagazin aufweisenden Klammerschenkels und
- Fig. 7: eine im Schnitt gehaltene Oberseitenansicht des vorderen Endbereiches des in Figur 6 und 7 gezeigten Klammerschenkels.

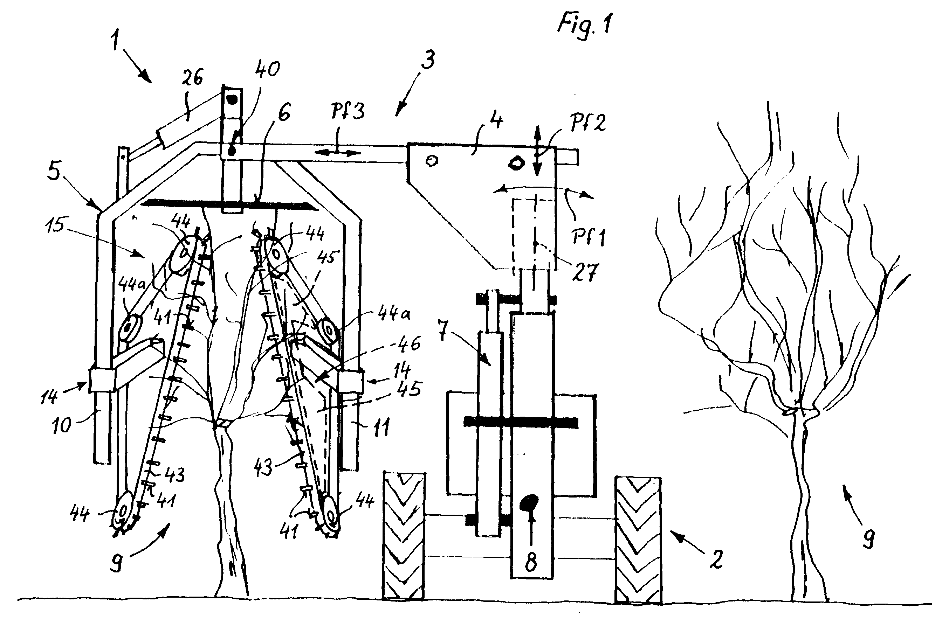

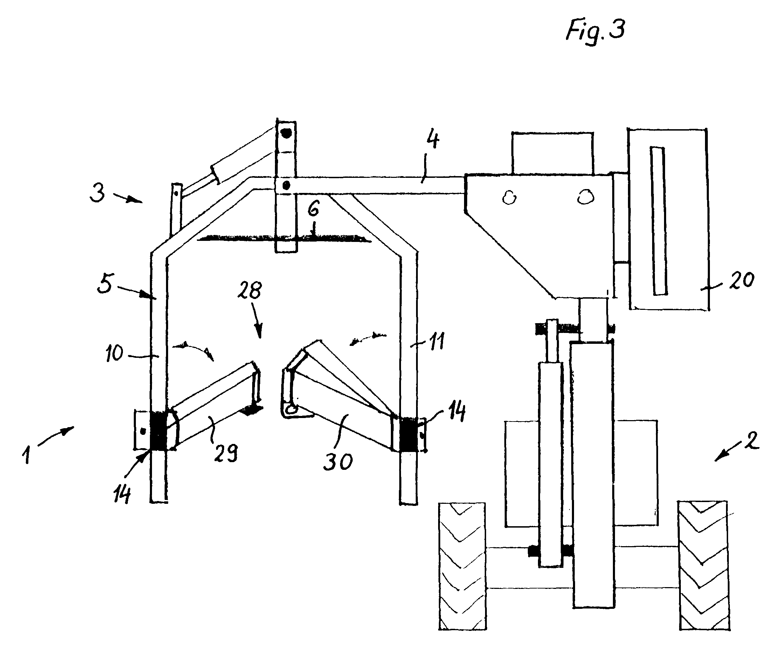

Eine in Figur 1 gezeigte Rebenbearbeitungseinrichtung 1 ist als Anbaugerät für ein Trägerfahrzeug 2 ausgebildet und weist ein Basisgerät 3 auf, das im wesentlichen aus einem galgenförmigen Ausleger, einem Trägerrahmen 5 sowie einem beim oberen Bereich des Trägerrahmens 5 angeordneten Messer 6 (Entgipfler) besteht.
Der Ausleger 4 ist über eine Halterung mit dem Trägerfahrzeug 2 verbunden und weist dort eine Hubeinrichtung 7 sowie eine Schwenklagerung 8 auf, um die der Ausleger 4 seitlich rechts und links um etwa 30° verschwenkbar und in der gewünschten Lage festlegbar ist.
Diese Verschwenkbarkeit ist durch den Pfeil Pf1, die Höhenverstellbarkeit durch den Pfeil Pf2 und schließlich noch die Verstellbarkeit der Auslegerweite durch den Pfeil Pf3 gekennzeichnet.
Am freien, oberen Auslegerende ist der Trägerrahmen 5 über ein Schwenkgelenk 40 aufgehängt. Der Trägerrahmen 5 befindet sich so seitlich neben dem Trägerfahrzeug 2, wobei die Rahmenebene quer zur Fahrtrichtung des Fahrzeuges verläuft. Der Trägerrahmen 5 ist bei dem Schwenkgelenk 8 seitlich pendelnd gelagert und zur Dämpfung in dieser Schwenkrichtung ist ein Schwingungsdämpfer 26 vorgesehen. Das kopfseitige Messer 6 zum Entgipfeln ist entgegen der Fahrtrichtung schwenkbar gelagert und kann so bei entsprechend größerem Widerstand nach hinten ausweichen. Es ist dadurch eine Anfahrsicherung gebildet.
Im Ausführungsbeispiel ist der Trägerrahmen 5 im wesentlichen umgekehrt U-förmig ausgebildet und übergreift eine Rebzeile 9.
In Figur 1 ist die Rebenbearbeitungseinrichtung 1 durch schräg nach oben verlaufende und in diese Richtung transportierende, vorzugsweise durch Keilriemen gebildete Förderriemen 43 realisiert, die über Umlenkriemenscheiben 44 geführt sind. Außenseitig weisen die Förderriemen 43 Mitnehmervorsprünge 41 beispielsweise in Form von Noppenstäben oder dergleichen auf. Die im Ausführungsbeispiel stabförmigen Mitnehmer 41 können außenseitig in beliebigem Abstand je nach den Erfordernissen mit dem Keilriemen verbunden werden, wobei dies bei Verwendung eines Kunststoff-Keilriemens durch Schweißen oder Kleben erfolgen kann. Die stabförmigen Mitnehmer haben vorzugsweise einen gerundeten Querschnitt, um Beschädigungen an den Trieben zu vermeiden. Die Umlenkriemenscheiben weisen vorzugsweise axial versetzte, hier nicht dargestellte Schnurrillen auf, über die mit Hilfe einer zu verlegenden Heftschnur der Antrieb der Förderriemen erfolgen kann.
Der Abstand der Umlenkriemenscheiben für jeweils einen Förderriemen und damit die Förderstrecke kann den jeweiligen Erfordernissen entsprechend angepasst werden. Da diese Fördermittel nur ein geringes Gewicht aufweisen, besteht hierbei auch insbesondere die Möglichkeit, die Umlenkriemenscheiben so weit voneinander zu beabstanden, daß einerseits im unteren Bereich ein sicheres Erfassen der aufzurichtenden Triebe erfolgt und andererseits auch die erfaßten Rebtriebe bis über eine Heftstelle hinaus mitgenommen werden können. Der Zwischenraum innenseitig zwischen den Förderriemenabschnitten und den Umlenkriemenscheiben ist zumindest bereichsweise durch ein nur rechtsseitig strichliniert angedeutetes Leitblech 45 ausgefüllt, durch das verhindert wird, daß Rebtriebe zwischen den Riemen und eine der Umlenkriemenscheiben gelangt und außerdem bildet das Leitblech eine seitlich Anlage für die Rebtriebe, so daß auf die Förderriemen einwirkende Querkräfte vermieden werden. Bei dem von den Rebtrieben belasteten, inneren Riementrum weist das Leitblech eine Auflageführung auf, durch die Druckbeaufschlagungen des Förderriemens aufgefangen werden. Die gegenüberliegende Seite des Leitbleches ist mit einer Abkröpfung versehen, welche das andere, zurücklaufende Riementrum umgreift. Im gezeigten Ausführungsbeispiel durchgreifen Klammerschenkel 29,30 eines Klammergerätes 28 (vergleiche auch Fig.3 sowie Fig. 5 bis 7) die von den Umlenkriemenscheiben 44,44a aufgespannte Ebene und es sind in den Leitblechen 45 entsprechende Ausschnitte 46 vorgesehen.

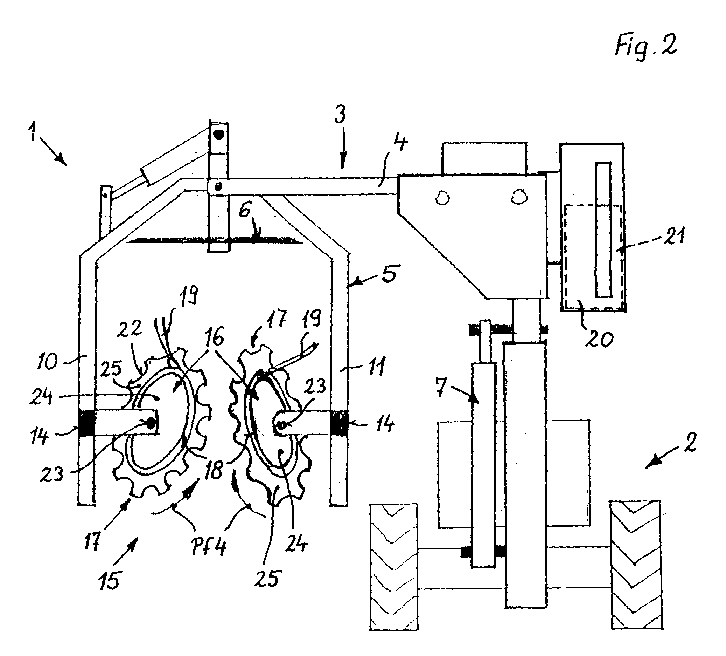

Der galgenförmige Ausleger kann um eine vertikale Achse 27 um etwa 180° auf die andere Seite des Trägerfahrzeuges verschwenkt werden. Damit besteht die Möglichkeit, bei einer vorgegebenen Fahrtrichtung des Trägerfahrzeuges wahlweise die rechts oder links danebenliegende Rebzeile bearbeiten zu können. Werden Schneidwerke zum seitlichen Beschneiden des Laubes eingesetzt, so sind die innenseitig an den Seitenschenkeln 10 und 11 des Trägerrahmens übereinander angeordneten, vertikal orientierten Rotationsmesser jeweils an ihrer in der Umlaufebene vorderen und hinteren Kante mit Schneiden versehen, damit in beiden Schwenkendstellungen des Auslegers 4 auf der einen oder auf der anderen Seite des Trägerfahrzeuges gleich gute Schnittergebnisse erzielt werden.
Die Seitenschenkel 10 und 11 weisen Befestigungsstellen 14 auf, bei denen Bearbeitungsgeräte 12 lösbar anbringbar sind. Nach dem Lösen einer entsprechenden Halterung bei diesen Befestigungsstellen 14 können die Bearbeitungsgeräte abgenommen werden. An das dann vorhandene Basisgerät 3 lassen sich außer Schneidwerken auch andere Ausbaugeräte mit unterschiedlichen Bearbeitungsfunktionen anbringen, insbesondere auch die in Fig. 1 gezeigte Aufnahme- und Aufrichteinrichtung 15.
In dem in Figur 2 gezeigten Ausführungsbeispiel ist das Basisgerät 3 der Rebenbearbeitungseinrichtung 1 mit einer Aufnahme- und Aufrichteinrichtung 15 als Ausbaugerät ausgerüstet. Damit können schräg verlaufende Rebtriebe aufgenommen und in eine etwa vertikale Lage ausgerichtet werden. Die in Figur 2 gezeigte Aufnahme- und Aufrichteinrichtung 15 weist dazu zwei schräg angeordnete Tellerräder 16 mit einer am Außenumfang befindlichen Zahnung 17 auf. Die beiden Tellerräder 16 sind an den beiden Außenschenkeln des Trägerrahmens 5 gegenüberliegend angeordnet. Sie sind schräg zueinander mit in Fahrtrichtung des Trägerfahrzeuges sowie nach oben sich verkleinerndem Tellerebenen-Abstand angeordnet. Durch diese Schrägstellung mit in Fahrtrichtung vorderseitig und oberseitig geringerem Abstand zueinander, werden die einzelnen Rebtriebe mit der Zahnung 17 gut erfaßt und durch die Drehung der Tellerräder 16 entsprechend den Pfeilen Pf4 aufgerichtet. Im oberen Bereich laufen die Tellerradebenen nach hinten wieder auseinander, so daß etwa im oberen Bereich der Tellerräder die in eine etwa vertikale Lage transportierten Triebe freigegeben werden.
In Verbindung mit der Aufnahme- und Aufrichteinrichtung 15 ist eine nicht näher gezeigte Abwickeleinrichtung zum Abspulen von etwa parallel nebeneinander beidseitig der Rebzeile zu verlegenden Schnüren 19, Fäden oder dergleichen Zugelementen vorgesehen, die in bestimmten Abständen zusammengeheftet werden. Dadurch werden die aufgerichteten Rebtriebe in dieser Lage gehalten.
Die Abwickeleinrichtung zum Abspulen der etwa parallel nebeneinander beabstandeten Schnüre 19 weist eine Kontrolleinrichtung zur Überwachung der Schnur- oder Garnrollen auf, die sich in einem Aufnahmekasten 20 befinden. Dieser weist dazu Sichtfenster 42 auf, die sich im Blickfeld des Fahrers befinden, damit dieser rechtzeitig erkennen kann, wann eine nächste Schnurrolle angeknüpft werden muß. Die Abwickeleinrichtung kann gleichzeitig auch zum Antrieb der Tellerräder 16 oder aber auch der Fördermmittel der anderen, in Fig. 1 gezeigten Aufnahme- und Aufrichteinrichtung verwendet werden. Die Tellerräder weisen dazu Schnurrillen 18 auf, über die die mit einem Ende am Ende einer Rebzeile befestigten Schnüre 19 geführt sind. Die Schnur ist dann vorzugsweise entlang den TrägerrahmenTeilen zu einem in einem Aufnahmekasten 20 befindlichen Schnurvorrat geführt, von dem die Schnur abgewickelt wird. Dies erfolgt, wenn sich das Trägerfahrzeug 2 von den äußeren Befestigungsstellen der Schnur am Ende einer Rebzeile fortbewegt. Da die Schnüre über die Tellerräder 16 geführt sind, bewegen sich diese synchron zur Fahrgeschwindigkeit. Dies ist von wesentlicher Bedeutung, da die passende Zuordnung von Fahrgeschwindigkeit und Drehzahl der Tellerräder 16 zu einem exakten Aufrichten der Rebtriebe in vertikale Lage führt.
Gegebenenfalls können bei der Aufnahme- und Aufrichteinrichtung etwa in Fahrtrichtung mehrere Tellerräder beidseitig der Rebzeile hintereinander angeordnet sein. Die Lage und Ausrichtung dieser Tellerräder ist so einstellbar, daß sich eine weitgehend kontinuierliche Aufnahme und Weitergabe der aufzurichtenden Rebtriebe von einem zum jeweils nächstem Tellerrad ergibt.
In der Praxis hat sich gezeigt, daß die zwischen den Zahnungen 17 befindlichen Zwischenräume 22 eine lichte Weite von etwa 1,5 bis 3 cm haben können, um die aufzurichtenden Rebtriebe gut erfassen zu können. Anstatt der dargestellten Zahnung können auch etwa radial vorstehende Stäbe oder dergleichen Mitnehmer vorgesehen sein.
Bevorzugt ist vorgesehen, daß die Tellerräder ein die Nabe bildendes und das Drehlager 23 aufweisendes Trägerteil 24 haben, mit dem ein auswechselbares Außenringteil 25 verbunden ist. Dieses Außenringteil mit der Zahnung 17 ist vorzugsweise aus Kunststoff ausgebildet und kann als Verschleißteil einfach ausgewechselt werden.
In Verbindung mit der Abwickeleinrichtung zum Abspulen von etwa parallel nebeneinander beabstandeten Schnüren wurde bereits vorerwähnt, daß diese in gewissen Abständen zusammengeheftet werden, um die aufgerichteten Rebtriebe in der aufgerichteten, vertikalen Lage zu fixieren. Dies kann entweder manuell vorgenommen werden oder mittels eines in Figur 3 schematisch angedeuteten Klammergerätes 28 durchgeführt werden. Der besseren Übersichtlichkeit wegen ist in Fig. 3 nur das Klammergerät 28 dargestellt. In der Praxis arbeitet das Klammergerät jeweils in Verbindung mit einer der Aufnahme- und Aufrichteinrichtungen, die in Fig. 1, 2 und 4 dargestellt sind. Die Aufnahme- und Aufrichteinrichtung befindet sich dabei in Fahrtrichtung vor dem Klammergerät 28.
Das Klammergerät 28 weist zwei in einer etwa horizontalen Ebene verschwenkbare, über Hubzylinder angetriebene Klammerschenkel 29, 30 auf, die an ihren freien Enden einen Heftkopf 31 bilden, bei dem beim Aufeinandertreffen der kopfseitigen Enden der Klammerschenkel 29 und 30, die Schnüre zusammenheftende Klammern ausgegeben und zugebogen werden.

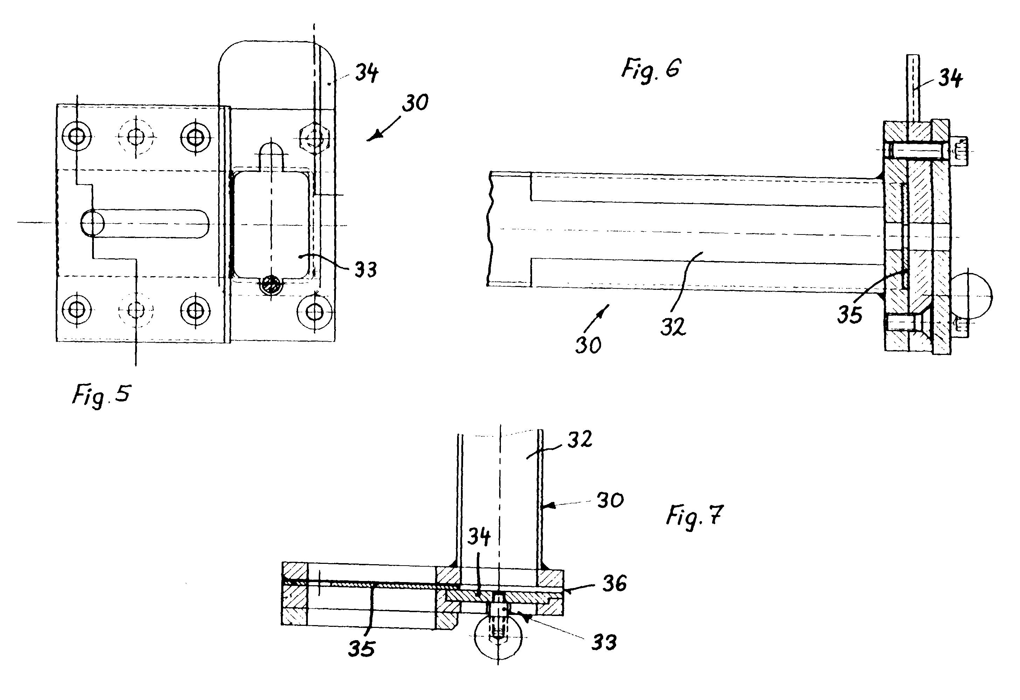

Auch das Klammergerät 28 bildet ein Ausbaugerät, das bedarfsweise in Verbindung mit dem Basisgerät 3 und einer Aufnahme- und Aufrichteinrichtung 15 sowie einer Abwickeleinrichtung für die Schnüre eingesetzt werden kann.
Eine Besonderheit des Klammergerätes 28 ist in den Figuren 5 bis 6 gezeigt. Der Klammerschenkel 30, in dem ein Klammermagazin 32 untergebracht ist, weist beim Heftkopf eine vom Stirnende des Klammerschenkels 30 her zugängliche Nachladeöffnung 33 auf, die über einen Schieber 34 verschließbar ist. Der Schieber 34 bildet in Schließstellung einen Anschlag für unter Vorspannung stehende magazinierte Klammern, die mit Hilfe einer Stößerplatte 35 nacheinander bei einer Abgabeöffnung 36 ausgestoßen werden können. Ist das Klammermagazin 32 leer, kann der Schieber 34 geöffnet werden und es ist auf einfache Weise durch die dann freigegebene Nachladeöffnung ein Nachladen von Klammern möglich. Insbesondere ist es durch die stirnseitige Nachlademöglichkeit nicht erforderlich, von der Seite her an den Klammerschenkeln zu hantieren. In diesem Bereich besteht eine erhöhte Klemmgefahr für die Finger, da hier vergleichsweise beengte Verhältnisse herrschen.
Innerhalb des Klammermagazins 2 ist überlicherweise eine Druckfeder angeordnet, die beim Aufmagazinieren mit Klammern zusammengedrückt wird. Um die Federspannung beim Aufmagazinieren zu kompensieren und damit das Nachladen der Klammern zu vereinfachen, kann das freie Federende oder ein dort befindlicher Schieber mit einem vorzugsweise manuell betätigbaren Zug- oder Schubelement verbunden sein, mittels dem die Feder zunächst in maximal gespannte Endlage zurückgezogen beziehungsweise zurückgedrückt werden kann. Bevorzugt kann dazu ein Zugelement, dessen eines Ende mit der Feder verbunden ist, über eine Umlenkung, die sich bei dem dem Heftkopf abgewandten Ende des Klammermagazins 32 befindet, geführt sein und mit seinem anderen Ende kann ein Zuggriff verbunden sein, der sich neben der Nachladeöffnung 33 beziehungsweise am kopfseitigen Ende des Klammerschenkels 30 befindet. Während des Nachladens kann gleichzeitig am Zuggriff gezogen und damit die Federvorspannung mehr oder weniger kompensiert werden.
Anstatt einer Druckfeder zum Beaufschlagen der magazinierten Klammern kann auch ein vorzugsweise etwa parallel neben der Magazinkammer angeordneter Hubzylinder vorgesehen sein, der mit dem Magazin-Schieber verbunden ist.
Auch für die Schwenkbewegung der beiden Klammerschenkel können Hubzylinder, insbesondere Hydraulikzylinder vorgesehen sein, die ebenfalls etwa parallel neben dem jeweiligen Klammerschenkel angeordnet sind. Dadurch ergeben sich kompakte und praktisch geschlossene Baueinheiten an denen sich bewegende Teile nach außen hin abgeschirmt sind. Dadurch besteht die Möglichkeit das Klammergerät gefahrlos auch im Zugriffsbereich des Fahrers anzuordnen. Nach dem Heftvorgang werden die beiden Klammerschenkel 29 und 30 durch Federkraft wieder in ihre geöffnete Ausgangsstellung gebracht. Um harte Anschläge in Öffnungsstellung zu vermeiden, sind vorzugsweise in die Hubzylinder zum Betätigen der Klammerschenkel integrierte, vorzugsweise hydraulische Endlagendämpfer vorgesehen.

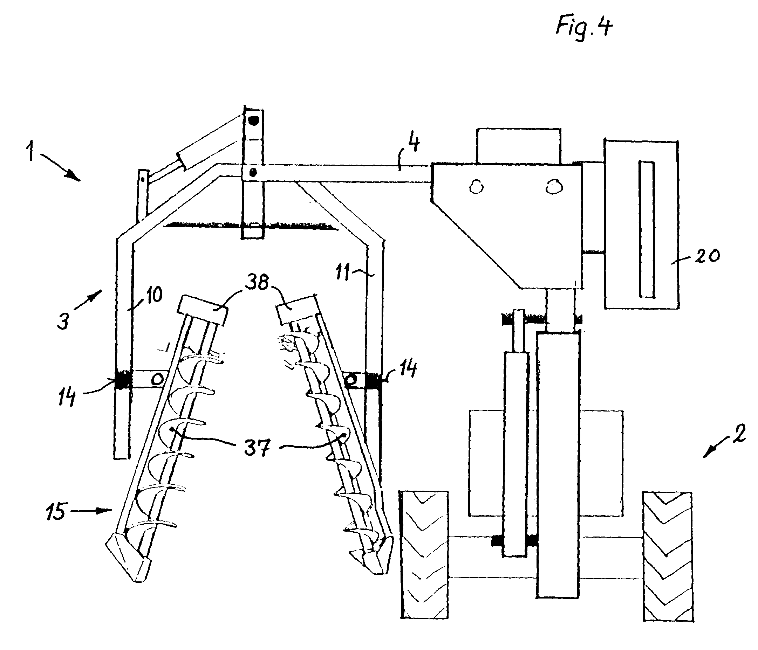

Die Figur 4 zeigt noch eine andere Ausführungsform einer Aufnahmeund Aufrichteinrichtung 15, wobei an den beiden Seitenschenkeln 10 und 11 des Trägerrahmens 5 schräg nach oben verlaufende und in diese Richtung transportierende Förderschnecken 37 vorgesehen sind. An den oberen Enden der Förderschnecken 37 befinden sich motorische Antriebe 38, die vorzugsweise durch Hydraulikmotoren gebildet sind. Um eine Fahrgeschwindigkeits- synchrone Fördergeschwindigkeit der Förderschnecken 37 zu erreichen, sind die Antriebe 38 mit einer Steuerung verbunden, die die Antriebe 38 in Abhängigkeit der Fahrgeschwindigkeit des Trägerfahrzeuges 2 steuert. An dem Steuergerät ist auch noch eine Einstellmöglichkeit vorhanden, um die zur Fahrgeschwindigkeit proportionale Fördergeschwindigkeit einstellen beziehungsweise ändern zu können.
An den oberen Enden der Förderschnecken können noch Verlängerungen angekuppelt sein, die sich insbesondere bis hinter den Trägerrahmen 5 bzw. bei Einsatz eines Klammergerätes bis oder über eine Heftstelle hinaus erfolgt. Dadurch werden die Rebtriebe bis in eine vertikale Lage gebracht, geheftet und dann freigegeben, um schließlich durch das nachfolgende Gipfelgerät an ihren Enden abgeschnitten zu werden. Die Förderschnecken-Verlängerungen können auch als Zusatzgerät ausgebildet sein, so daß sie nur erforderlichenfalls montiert werden. Als Antriebsverbindung kann ein Kreuzgelenk vorgesehen sein, da die durch die Verlängerungen gebildeten, oberen Förderabschnitte etwas flacher verlaufen als die übrigen Förderschnecken. Um ein kontinuierliches Vorbeitransportieren bei der Kuppelstelle zwischen Förderschnecke und oberer Verlängerung sicherzustellen, können die Antriebe 38 etwas nach außen versetzt angeordnet sein. Es besteht auch die Möglichkeit, die Förderschnecken 37 und ihre jeweiligen Verlängerungen über Zahnriemen separat von einem abgesetzten Motor aus anzutreiben. Dabei können die oberen, durch die Verlängerungen gebildeten Förderabschnitte auch eine etwas höhere Fördergeschwindigkeit aufweisen, um auf möglichst kurzer Strecke ein Ausrichten der zugeförderten Triebe in vertikale Richtung zu erreichen. Erwähnt sei noch, daß bei motorischen Antrieben für die Fördermittel der Aufnahme- und Aufrichteinrichtungen 15 vorzugsweise Ölmotoren dienen, wobei die Ölmotoren der beiden Fördermittel in Reihe an einen Ölkreislauf angeschlossen sind. Bevorzugt ist auch der Antriebsmotor des Gipfelgerätes als Ölmotor ausgebildet und mit in diesen Kreislauf eingeschleift. Bei dem Gipfelgerät ist dann eine Übersetzung vorgesehen, da das Gipfelmesser mit wesentlich höherer Drehzahl läuft als die Transportmittel. Somit ist nur ein Ölkreislauf notwendig, so daß u.a. die Handhabung beim Anschließen und auch bezüglich der Steuerung für eine Fahrgeschwindigkeits-synchrone Fördergeschwindigkeit der Fördermittel vereinfacht ist.

Je nach verwendetem Trägerfahrzeug 2 kann die als Anbaugerät ausgebildete Rebenbearbeitungseinrichtung an der Front-Dreipunktaufhängung, einer Frontanbaukonsole oder aber etwa mittig der Längserstreckung des Fahrzeuges vor dem Fahrerbereich an einer brückenartig ausgebildeten Halterung befestigt sein.

Das vorbeschriebene Gerät läßt sich je nach den durchzuführenden Arbeiten mit Hilfe unterschiedlicher Ausbaugeräte, die am Basisgerät anbringbar sind, an unterschiedliche Arbeiten - zum Beispiel Vorschnitt, Laubschnitt, Aufheften usw. - anpassen. Schon ein Basisgerät mit allen damit verbindbaren Ausbaugeräten ist kostengünstiger als eine entsprechende Anzahl von Komplettgeräten. Außerdem ist ein kostengünstiger, stufenweiser Aufbau der Rebenbearbeitungseinrichtung zunächst mit Anschaffung des Basisgerätes und eines ersten Ausbaugerätes möglich und zu späteren Zeitpunkten können nach und nach weitere Ausbaugeräte angeschafft werden. Schließlich kann der Benutzer der erfindungsgemäßen Rebenbearbeitungseinrichtung für seine speziellen Belange und seine Arbeitsweise ein passendes Sortiment oder für ihn passende Ausbaugeräten anschaffen. Zusatzkosten durch für ihn unnütze Geräte werden somit vermieden.

## Patentansprüche

1. Rebenbearbeitungseinrichtung, die als Anbaugerät an einem Trägerfahrzeug mittels eines galgenförmigen Auslegers anbringbar ist und einen mit dem Trägerfahrzeug verbindbaren Trägerrahmen aufweist, der mit seiner Rahmenebene quer zur Fahrtrichtung des Trägerfahrzeugs verläuft und Seitenschenkel hat, welche die zu bearbeitende Rebzeile zumindest bereichsweise übergreifen, wobei der Trägerrahmen und der Ausleger als Basisgerät zum lösbaren Anbringen von Ausbaugeräten mit unterschiedlichen Bearbeitungsfunktionen ausgebildet sind und mit zumindest einer, ein Ausbaugerät bildenden Aufnahme- und Aufrichteinrichtung (15) mit angetriebenen Fördermitteln zum Aufrichten der Rebtriebe, wobei die Aufnahme- und Aufrichteinrichtung (15) einen an die Fahrgeschwindigkeit des Trägerfahrzeugs anpaßbaren und einstellbaren Antrieb aufweist, **dadurch gekennzeichnet, daß** die Steuerung der Fördergeschwindigkeit der Aufnahme- und Aufrichteinrichtung proportional zur Fahrtgeschwindigkeit des Trägerfahrzeugs mit einem Steuergerät erfolgt.

2. Rebenbearbeitungseinrichtung, die als Anbaugerät an einem Trägerfahrzeug mittels eines galgenförmigen Auslegers anbringbar ist und einen mit dem Trägerfahrzeug verbindbaren Trägerrahmen aufweist, der mit seiner Rahmenebene quer zur Fahrtrichtung des Trägerfahrzeugs verläuft und Seitenschenkel hat, welche die zu bearbeitende Rebzeile zumindest bereichsweise übergreifen, wobei der Trägerrahmen und der Ausleger als Basisgerät zum lösbaren Anbringen von Ausbaugeräten mit unterschiedlichen Bearbeitungsfunktionen ausgebildet sind und mit zumindest einer, ein Ausbaugerät bildenden Aufnahme- und Aufrichteinrichtung (15) mit angetriebenen Fördermitteln zum Aufrichten der Rebtriebe, wobei die Aufnahme- und Aufrichteinrichtung (15) einen an die Fahrgeschwindigkeit des Trägerfahrzeugs anpaßbaren und einstellbaren Antrieb aufweist, wobei als zusätzliches Ausbaugerät ein Klammergerät zum Zusammenheften von parallel nebeneinander verlegten Schnüren sowie eine Abwickeleinrichtung für die Schnüre (19) oder dergleichen Zugelementen vorgesehen sind, die beim Aufheften der Rebtriebe mittels der Aufnahme- und Aufrichteinrichtung (15) beidseits längs der Rebzeile verlegt werden und dabei mit einem Ende an einem Ende der Rebzeile befestigt sind, **dadurch gekennzeichnet, daß** die Steuerung der Fördergeschwindigkeit der Aufnahme- und Aufrichteinrichtung proportional zur Fahrtgeschwindigkeit des Trägerfahrzeugs mit der Schnur-Abwickeleinrichtung erfolgt, die den Antrieb für die Fördermittel der Aufnahme- und Aufrichteinrichtung bildet.

3. Einrichtung nach Anspruch 2, **dadurch gekennzeichnet, daß** die Schnüre bei der Aufnahme- und Aufrichteinrichtung (15) jeweils um eine Antriebsrolle oder dergleichen Antriebselement geführt sind, die mit den Fördermitteln in Antriebsverbindung steht und daß die Antriebsrolle mehrere, im Durchmesser unterschiedliche Schnurrillen zum Verstellen der Antriebsdrehzahl aufweist.

4. Einrichtung nach Anspruch 2 oder 3, **dadurch gekennzeichnet, daß** die mit wenigstens einer Schnurrille versehene Antriebsrolle über ein vorzugsweise stufenloses Getriebe mit den Fördermitteln in Antriebsverbindung steht.

5. Einrichtung nach einem der Ansprüche 2 bis 4, **dadurch gekennzeichnet, daß** die Abwickeleinrichtung zum Abspulen von etwa parallel nebeneinander beabstandeten Schnüren, Fäden oder dergleichen eine Kontrolleinrichtung zur Überwachung der Schnur- oder Garnrollen aufweist und daß dazu vorzugsweise Sichtfenster (42) bei einem Aufnahmekasten (20) für die Schnuroder Garnrollen vorgesehen sind.

6. Einrichtung nach Anspruch 1, **dadurch gekennzeichnet, daß** als motorische Antriebe für die Aufnahme- und Aufrichteinrichtung (15), Elektromotoren oder Hydraulikmotoren vorgesehen sind und daß diese Antriebe mit der Steuerung für eine Fördergeschwindigkeit der Aufnahme- und Aufrichteinrichtung etwa proportional zur Fahrtgeschwindigkeit verbunden sind.

7. Einrichtung nach einem der Ansprüche 1 bis 6, **dadurch gekennzeichnet, daß** die Aufnahme- und Aufrichteinrichtung (15) gegenüberliegend an den beiden Seitenschenkeln des Trägerrahmens (5) lösbar anbringbare und drehbar gelagerte Tellerräder (16) mit am Außenumfang befindlicher Zahnung (17) oder dergleichen Mitnehmer aufweist, deren Tellerebenen schräg zueinander mit in Fahrtrichtung des Trägerfahrzeuges sowie nach oben sich verkleinerndem Tellerebenen-Abstand angeordnet sind.

8. Einrichtung nach Anspruch 7, **dadurch gekennzeichnet, daß** die Tellerräder für einen Fahrgeschwindigkeits-synchronen Antrieb jeweils zu ihrer Zahnung oder dergleichen nach innen zurückversetzte Schnurrillen (18) aufweisen, welche von den beim Aufheften zu verlegenden Schnüren (19) zumindest teilweise umschlungen sind.

9. Einrichtung nach Anspruch 7 oder 8, **dadurch gekennzeichnet, daß** etwa in Fahrtrichtung mehrere Tellerräder (16) hintereinander angeordnet und deren durch die Zahnung oder dergleichen gebildeten Aufnahmen für eine weitgehend kontinuierliche Aufnahme und Weitergabe der Rebtriebe von einem zum jeweils nächsten Tellerrad ausgerichtet sind.

10. Einrichtung nach einem der Ansprüche 7 bis 9, **dadurch gekennzeichnet, daß** die Tellerräder (16) im wesentlichen durch ein das Drehlager (23) aufweisendes Trägerteil (24) sowie ein damit verbundenes, die Zahnung (17) oder dergleichen Aufnahmen aufweisendes, vorzugsweise aus Kunststoff bestehendes, insbesondere auswechselbares Außenringteil (25) bestehen.

11. Einrichtung nach einem der Ansprüche 1 bis 6, **dadurch gekennzeichnet, daß** die Aufnahme- und Aufrichteinrichtung (15) gegenüberliegend an den beiden Seitenschenkeln (10,11) des Trägerrahmens (5) lösbar anbringbare, schräg nach oben verlaufende und in diese Richtung transportierende Förderschnecken (37) aufweist, deren Schneckenwindungen derart beabstandet sind, daß unter Berücksichtigung der Schräglage der Förderschnecke zwischen den Schneckenwindungen in etwa vertikaler Richtung ein lichter Durchtritt für aufzurichtende Triebe vorhanden ist und daß der Windungsabstand vorzugsweise mehr als 125mm, z.B.180mm bei einer Schräglage der Förderschnecken von etwa 50° bis etwa 60° beträgt.

12. Einrichtung nach Anspruch 11, **dadurch gekennzeichnet, daß** die Förderschnecken höhenverstellbar angeordnet sind.

13. Einrichtung nach Anspruch 11 oder 12, **dadurch gekennzeichnet, daß** am oberen Ende der Förderschnecken (37) Kupplungsstellen für dort ankuppelbare Förderschnecken-Verlängerungen vorgesehen sind, die sich bis hinter den Trägerrahmen erstrecken und daß die Förderschnecken-Verlängerungen vorzugsweise in einem flacherem Winkel angeordnet sind als die übrige Förderschnecke (37) und daß bei der Kupplungsstelle insbesondere Kreuzgelenke für die Antriebsübertragung vorgesehen sind.

14. Einrichtung nach Anspruch 13, **dadurch gekennzeichnet, daß** die Förderschnecken-Verlängerung mit einer höhere Antriebsdrehzahl als die Förderschnecke (37) arbeitet und daß dazu vorzugsweise die Antriebsübertragung zwischen Förderschnecke und Förderschnecken-Verlängerung eine Übersetzung aufweist.

15. Einrichtung nach einem der Ansprüche 1 bis 6, **dadurch gekennzeichnet, daß** die Aufnahme- und Aufrichteinrichtung (15) gegenüberliegend an den beiden Seitenschenkeln (10,11) des Trägerrahmens (5) lösbar anbringbare, schräg nach oben verlaufende und in diese Richtung transportierende, vorzugsweise durch Keilriemen gebildete Förderriemen (43) aufweist, die über Umlenkriemenscheiben geführt sind und daß die Förderriemen außenseitig Mitnehmervorsprünge (41), beispielsweise in Form von Noppen, Stäben und dergleichen aufweisen.

16. Einrichtung nach Anspruch 15, **dadurch gekennzeichnet, daß** die Umlenkriemenscheiben jeweils eines Förderriemens aus einer miteinander fluchtenden Lage verstellbar sind und daß insbesondere die oberen, seitlich benachbarten Umlenkriemenscheiben in ihrer Schräglage zueinander verstellbar sind.

17. Einrichtung nach Anspruch 15 oder 16, **dadurch gekennzeichnet, daß** der innenseitig jeweils von dem Förderriemen und den Umlenkriemenscheiben umgrenzte Zwischenraum vorzugsweise durch ein Leitblech zumindest bereichsweise ausgefüllt ist, das an seiner dem inneren Riementrum zugewandten Seite als Auflageführung für den Förderriemen ausgebildet ist und das an der gegenüberliegenden Seite das andere Riementrum umgreift.

18. Einrichtung nach einem der Ansprüche 1 bis 17, **dadurch gekennzeichnet, daß** das zum Zusammenheften von parallel nebeneinander verlegten Schnüre vorgesehene Klammergerät gegenüberliegend an den beiden Seitenschenkeln (10,11) des Trägerrahmens (5) lösbar anbringbare Klammerschenkel (29,30)aufweist, daß beim Heftkopf eine vom Stirnende des Klammerschenkels her zugängliche Nachladeöffnung (33) für Klammern vorgesehen ist und daß bei dieser Nachladeöffnung ein Verschlußschieber (34) angeordnet ist, der in Schließstellung einen Anschlag für unter Vorspannung stehende, in einem der Seitenschenkel magazinierte Klammern bildet.

19. Einrichtung nach Anspruch 18, **dadurch gekennzeichnet, daß** ein die magazinierten Klammern beaufschlagender Schieber zur Erzeugung der Vorspannung oder eine den Schieber beaufschlagende Druckfeder mit einem vorzugsweise manuell betätigbaren Zug- oder Schubelement zur Kompensation der Vorspannung vorgesehen ist.

20. Einrichtung nach Anspruch 18 oder 19, **dadurch gekennzeichnet, daß** als Antrieb für den Schieber zur Erzeugung einer Vorspannung auf die magazinierten Klammern ein vorzugsweise neben der Magazinkammer angeordneter Hubzylinder vorgesehen ist.

21. Einrichtung nach einem der Ansprüche 18 bis 20, **dadurch gekennzeichnet, daß** als Antrieb für die Schwenkbewegung der beiden Klammerschenkel jeweils ein Hubzylinder, insbesondere Hydraulikzylinder vorgesehen sind, daß diese Hubzylinder vorzugsweise etwa parallel neben dem jeweiligen Klammerschenkel angeordnet sind und daß sie insbesondere integrierte, vorzugsweise hydraulische Endlagendämpfer aufweisen.

## Claims

1. A vine processing apparatus which can be fixed as a mounted unit on a carrier vehicle by means of a gallows-shaped beam and which has a supporting frame which can be attached to the carrier vehicle, the frame plane of which extends transverse to the direction of travel of the carrier vehicle, and which has lateral limbs which at least partially extend over the row of vines which is to be processed, wherein the supporting frame and the boom are configured as a basic unit for the releasable attachment of implements with different processing functions and with at least one receiving and lifting apparatus (15) which forms an implement, with driven conveying means for lifting the vine shoots, wherein the receiving and lifting apparatus (15) has a drive which can be adapted and adjusted to the travelling speed of the carrier vehicle, **characterised in that** the control of the conveying speed of the receiving and lifting apparatus takes place by means of a control unit in proportion to the travelling speed of the carrier vehicle.

2. A vine processing apparatus which can be disposed as a mounted unit on a carrier vehicle by means of a gallows-shaped boom and which has a supporting frame which can be attached to the carrier vehicle, the frame plane of which extends transverse to the direction of travel of the carrier vehicle, and which has lateral limbs which at least partially extend over the row of vines which is to be processed, wherein the supporting frame and the boom are configured as a basic unit for the releasable attachment of implements with different processing functions and with at least one receiving and lifting apparatus (15) which forms an implement, with driven conveying means for lifting the vine shoots, wherein the receiving and lifting apparatus (15) has a drive which can be adapted and adjusted to the travelling speed of the carrier vehicle, wherein a clamping device for fixing together parallel cords which have been laid out adjacent to one another and an unwinding apparatus for the cords (19) or similar tensile elements are provided, which are laid on both sides along the line of vines when fixing together the vine shoots by means of the receiving and lifting apparatus (15) and thereby are attached with one end on an end of the line of vines, **characterised in that** the control of the conveying speed of the receiving and lifting apparatus takes place in proportion to the travelling speed of the carrier vehicle with the cord-unwinding apparatus which forms the drive for the conveying means of the receiving and lifting apparatus.

3. An apparatus according to claim 2, **characterised in that** in the receiving and lifting apparatus (15), the cords are guided around a drive roller or similar drive element which is drivingly connected with the conveying means and that the drive roller has a plurality of cord grooves of different diameter to adjust the speed of the drive.

4. An apparatus according to claim 2 or 3, **characterised in that** the drive roller provided with at least one cord groove is in driving connection with the conveying means via a preferably stepless transmission.

5. An apparatus according to one of claims 2 to 4, **characterised in that** the unwinding apparatus for unwinding cords, threads or such like which have been laid out adjacent and substantially parallel to one another has a control apparatus for monitoring the cord or twine reels and that for this purpose, viewing windows (42) are preferably provided in a receiving box (20) for the cord or twine reels.

6. An apparatus according to claim 1, **characterised in that** electric or hydraulic motors are provided as motor drives for the receiving and lifting apparatus (15), and that these drives are connected to the conveying speed control of the receiving and lifting apparatus (15), approximately proportional to the travelling speed.

7. An apparatus according to one of claims 1 to 6, **characterised in that** the receiving and lifting apparatus (15) has releasably-attachable and swivellably-mounted crown wheels (16) which are disposed opposite one another on the two lateral limbs of the supporting frame (5) and which have toothing (17) or similar carriers on their outer circumference, the crown wheel planes being arranged at an angle to one another and with a reducing distance between them in the travelling direction of the carrier vehicle and from top to bottom.

8. An apparatus according to claim 7, **characterised in that** the crown wheels of a travelling speed-synchronous drive have cord grooves (18) set back inwards with regard to their toothing or similar, around which the cords (19) which are to be laid down when fixing together are at least partially wound.

9. An apparatus according to claim 7 or 8, **characterised in that** a plurality of crown wheels (16) are arranged behind one another substantially in the direction of travel, and the reception means of which, formed by the toothing or similar, are aligned to provide extensively continual reception and conveyance of the vine shoots from one crown wheel to the next.

10. An apparatus according to one of claims 7 to 9, **characterised in that** the crown wheels (16) substantially comprise the supporting part (24) which includes the rotating bearing (23) and an outer ring part (25), preferably made of plastic and especially being exchangeable, which is connected thereto and which includes the toothing (17) or similar reception means.

11. An apparatus according to one of claims 1 to 6, **characterised in that** the receiving and lifting apparatus (15) has conveyor worms (37), extending obliquely upwards and transporting in this direction, which are releasably attachable to the two lateral limbs (10, 11) of the supporting frame (5), the worm windings of which are spaced apart so that with consideration for the oblique alignment of the conveyor worm, an internal passage for the shoots which are to be lifted is provided in an approximately vertical direction between the worm windings and that the distance between the windings is preferably more than 125 mm, e.g. 180 mm with an oblique alignment of the conveyor worms of approximately 50° to approximately 60°.

12. An apparatus according to claim 11, **characterised in that** the conveyor worms are disposed so that their height can be adjusted.

13. An apparatus according to claim 11 or 12, **characterised in that** coupling points are provided at the upper end of the conveyor worms (37) for conveyor worm extensions which can be attached there, which extend to behind the supporting frame, and that the conveyor worm extensions are preferably disposed at a shallower angle than the rest of the conveyor worm (37) and that especially at the coupling point universal joints are provided for drive transmission.

14. An apparatus according to claim 13, **characterised in that** the conveyor worm extension works at a higher drive speed than the conveyor worm (37) and that to this end, the drive transmission between the conveyor worm and the conveyor worm extension preferably has a transmission ratio.

15. An apparatus according to one of claims 1 to 6, **characterised in that** the receiving and lifting apparatus (15) has conveying belts (43) which are preferably formed by V-belts, extending obliquely upwards and transporting in this direction, which are releasably attachable to the two lateral limbs (10, 11) of the supporting frame (5), these belts being guided over return belt pulleys, and that the conveying belts have carrier projections (41) on their outside, for example in the form of knobs, rods or similar.

16. An apparatus according to claim 15, **characterised in that** the return belt pulleys of a conveying belt are adjustable in each case from a position wherein they are flush with one another, and that in particular the level of tilt of the upper, laterally-adjacent return belt pulleys can be adjusted with regard to one another.

17. An apparatus according to claim 15 or 16, **characterised in that** the intermediate space on the inside limited by the .conveying belt and the return belt pulley is preferably filled, at least in part, by a baffle which is configured on its side facing the inner run of the belt as a support guide for the conveying belt and which engages around the other run of the belt on the opposite side.

18. An apparatus according to one of claims 1 to 17, **characterised in that** the clamping device provided for fixing together cords which have been laid out adjacent and in parallel to one another has releasably attachable clamping limbs (29, 30) disposed opposite one another on the two lateral limbs (10, 11) of the supporting frame (5), that a reloading opening (33) for clamps which is accessible from the face end of the clamp limb is provided at the lifting head and that a closure slide (34) is disposed at this reloading opening, forming a detent, when in the closed position, for clamps which are stored under tension in a magazine in one of the side limbs.

19. An apparatus according to claim 18, **characterised in that** a slider is provided which acts upon the clamps in the magazine to produce the tension, or a tensioned spring with a preferably manually-operable tension or pushing element to compensate for the pre-tension is provided which acts upon the slider.

20. An apparatus according to claim 18 or 19,
**characterised in that** a lifting cylinder is provided, preferably adjacent to the magazine chamber, as a drive for the slider to produce a pre-tension to act upon the clamps in the magazine.

21. An apparatus according to one of claims 18 to 20,
**characterised in that** in each case a lifting cylinder, especially hydraulic cylinders, are provided as a drive for the swivelling movement of the two clamp limbs, that these lifting cylinders are preferably disposed approximately parallel adjacent to the respective clamp limb and that they have integrated, preferably hydraulic end position dampers.

## Revendications

1. Dispositif de traitement de la vigne pouvant être monté sur un véhicule de support, en tant qu'appareillage rapporté, au moyen d'une console en forme de potence, et présentant un cadre de support qui peut être relié audit véhicule de support, s'étend transversalement, par son plan, vis-à-vis de la direction de déplacement dudit véhicule de support, et comporte des branches latérales coiffant, au moins par zones, le rang de vigne à travailler, le cadre de support et la console étant réalisés sous la forme d'un appareillage de base en vue du montage dissociable d'appareils auxiliaires remplissant différentes fonctions de traitement, et comportant au moins un système (15) de réception et de dressage constituant un appareil auxiliaire et muni de moyens convoyeurs entraînés, en vue de dresser les pousses de vigne, ledit système (15) de réception et de dressage présentant un entraînement réglable et adaptable à la vitesse de déplacement du véhicule de support, **caractérisé par le fait que** la commande de la vitesse de convoyage du système de réception et de dressage a lieu proportionnellement à la vitesse de déplacement du véhicule de support, à l'aide d'un appareil de commande.

2. Dispositif de traitement de la vigne pouvant être monté sur un véhicule de support, en tant qu'appareillage rapporté, au moyen d'une console en forme de potence, et présentant un cadre de support qui peut être relié audit véhicule de support, s'étend transversalement, par son plan, vis-à-vis de la direction de déplacement dudit véhicule de support, et comporte des branches latérales coiffant, au moins par zones, le rang de vigne à travailler, le cadre de support et la console étant réalisés sous la forme d'un appareillage de base en vue du montage dissociable d'appareils auxiliaires remplissant différentes fonctions de traitement, et comportant au moins un système (15) de réception et de dressage constituant un appareil auxiliaire et muni de moyens convoyeurs entraînés, en vue de dresser les pousses de vigne, ledit système (15) de réception et de dressage présentant un entraînement réglable et adaptable à la vitesse de déplacement du véhicule de support, sachant qu'il est prévu, en tant qu'appareil auxiliaire supplémentaire, un appareil de liage pour ligaturer des cordeaux implantés parallèlement en juxtaposition mutuelle, ainsi qu'un système de dévidage desdits cordeaux (19), ou éléments de traction similaires, lesdits cordeaux étant déposés de part et d'autre le long des rangs de vigne au moyen du système (15) de réception et de dressage, lors du liage des pousses de vigne, et étant alors fixés par une extrémité à une extrémité desdits rangs de vigne, **caractérisé par le fait que** la commande de la vitesse de convoyage du système de réception et de dressage a lieu proportionnellement à la vitesse de déplacement du véhicule de support, à l'aide du système de dévidage des cordeaux qui constitue l'entraînement affecté aux moyens convoyeurs dudit système de réception et de dressage.

3. Dispositif selon la revendication 2, **caractérisé par le fait que** les cordeaux sont respectivement guidés, dans le système (15) de réception et de dressage, autour d'un rouleau d'entraînement ou d'un élément d'entraînement similaire en liaison d'entraînement avec les moyens convoyeurs ; et **par le fait que** le rouleau d'entraînement comporte plusieurs rainures à cordeaux de diamètres différents, en vue de régler la vitesse angulaire d'entraînement.

4. Dispositif selon la revendication 2 ou 3, **caractérisé par le fait que** le rouleau d'entraînement, pourvu d'au moins une rainure à cordeau, est en liaison d'entraînement avec les moyens convoyeurs par l'intermédiaire d'une transmission préférentiellement continue.

5. Dispositif selon l'une des revendications 2 à 4, **caractérisé par le fait que** le système de dévidage, affecté au débobinage de cordeaux, fils ou objets analogues distants les uns des autres avec juxtaposition sensiblement parallèle, présente un système de contrôle destiné à surveiller les bobinots de cordeaux ou de fils ; et **par le fait que** des fenêtres d'observation (42) sont de préférence prévues, à cette fin, dans un caisson réceptacle (20) desdits bobinots de cordeaux ou de fils.

6. Dispositif selon la revendication 1, **caractérisé par le fait que** des moteurs électriques ou des moteurs hydrauliques sont prévus en tant qu'entraînements motorisés du système (15) de réception et de dressage ; et **par le fait que** ces entraînements sont reliés à la commande assurant une vitesse de convoyage dudit système de réception et de dressage à peu près proportionnelle à la vitesse de déplacement.

7. Dispositif selon l'une des revendications 1 à 6, **caractérisé par le fait que** le système (15) de réception et de dressage comporte, en vis-à-vis des deux branches latérales du cadre de support (5), des roues (16) à plateaux qui sont montées rotatives, peuvent être implantées de manière libérable et présentent une denture (17) ou un organe d'entraînement similaire situé(e) sur le pourtour extérieur, les plans des plateaux desdites roues étant agencés mutuellement à l'oblique, avec un espacement diminuant dans la direction de déplacement du véhicule de support, ainsi que vers le haut.

8. Dispositif selon la revendication 7, **caractérisé par le fait que** les roues à plateaux possèdent, en vue d'un entraînement en synchronisme avec la vitesse de déplacement, des rainures (18) à cordeaux qui sont respectivement en retrait vers l'intérieur, par rapport à leur denture ou configuration similaire, et sont au moins partiellement enlacées par les cordeaux (19) devant être mis en place lors du liage.

9. Dispositif selon la revendication 7 ou 8, **caractérisé par le fait que** plusieurs roues (16) à plateaux sont agencées en succession, sensiblement dans la direction du déplacement, et les logements desdites roues, formés par la denture ou configuration similaire, sont orientés afin de recevoir et de transférer les pousses de vigne d'une roue à la roue à plateau respectivement successive, dans une large mesure de manière continue.

10. Dispositif selon l'une des revendications 7 à 9, **caractérisé par le fait que** les roues (16) à plateaux sont composées, pour l'essentiel, d'une partie de support (24) munie du palier de rotation (23), ainsi que d'une partie annulaire extérieure (25) notamment remplaçable, reliée à la partie précitée, présentant la denture (17) ou les logements similaires et consistant, de préférence, en une matière plastique.

11. Dispositif selon l'une des revendications 1 à 6, **caractérisé par le fait que** le système (15) de réception et de dressage comporte, en vis-à-vis des deux branches latérales (10, 11) du cadre de support (5), des vis sans fin convoyeuses (37) pouvant être installées de manière libérable, s'étendant à l'oblique vers le haut et assurant un transport dans cette direction, les spires desdites vis sans fin étant espacées de façon telle qu'un passage intérieur pour des pousses devant être dressées soit sensiblement réservé dans la direction verticale, entre les spires des vis sans fin, en tenant compte de la position inclinée de la vis sans fin convoyeuse, et que la distance entre spires mesure de préférence plus de 125 mm, par exemple 180 mm dans le cas où les vis sans fin convoyeuses occupent une position inclinée d'environ 50° à environ 60°.

12. Dispositif selon la revendication 11, **caractérisé par le fait que** les vis sans fin convoyeuses sont agencées avec faculté de réglage en hauteur.

13. Dispositif selon la revendication 11 ou 12, **caractérisé par le fait que** des zones d'accouplement sont prévues à l'extrémité supérieure des vis sans fin convoyeuses (37), pour des prolongements de vis sans fin convoyeuses pouvant être accouplés à cet emplacement, et s'étendant jusqu'à l'arrière du cadre de support ; **par le fait que** les prolongements des vis sans fin convoyeuses sont disposés, de préférence, selon un angle plus aplati que la partie restante de la vis sans fin convoyeuse (37) ; et **par le fait que** des articulations à croisillons sont notamment prévues, dans la zone d'accouplement, pour la transmission de l'entraînement.

14. Dispositif selon la revendication 13, **caractérisé par le fait que** le prolongement d'une vis sans fin convoyeuse fonctionne à une plus grande vitesse angulaire d'entraînement que la vis sans fin convoyeuse (37) ; et **par le fait que** la transmission de l'entraînement entre la vis sans fin convoyeuse et le prolongement de ladite vis sans fin convoyeuse présente, de préférence, une démultiplication à cet effet.

15. Dispositif selon l'une des revendications 1 à 6, **caractérisé par le fait que** le système (15) de réception et de dressage comporte, en vis-à-vis des deux branches latérales (10, 11) du cadre de support (5), des courroies convoyeuses (43) de préférence formées par des courroies crantées pouvant être installées de manière libérable, s'étendant à l'oblique vers le haut et assurant un transport dans cette direction, et guidées par l'intermédiaire de poulies de renvoi ; et **par le fait que** les courroies convoyeuses possèdent, extérieurement, des protubérances d'entraînement (41) revêtant, par exemple, la forme de nodosités, de baguettes et organes similaires.

16. Dispositif selon la revendication 15, **caractérisé par le fait que** les poulies de renvoi d'une courroie convoyeuse considérée peuvent être déplacées à partir d'une position d'alignement mutuel ; et **par le fait que** notamment les poulies supérieures de renvoi, latéralement voisines, peuvent être réglées dans leur position inclinée réciproque.

17. Dispositif selon la revendication 15 ou 16, **caractérisé par le fait que** l'espace intercalaire, intérieurement circonscrit à chaque fois par la courroie convoyeuse et les poulies de renvoi, est de préférence occupé, au moins par zones, par une tôle de chicane qui est réalisée comme un guide conférant un appui à la courroie convoyeuse, sur son côté tourné vers le brin intérieur de la courroie, et qui ceinture l'autre brin de ladite courroie sur le côté opposé.

18. Dispositif selon l'une des revendications 1 à 17, **caractérisé par le fait que** l'appareil de liage, prévu pour ligaturer des cordeaux implantés parallèlement en juxtaposition mutuelle, présente des branches de liage (29, 30) pouvant être installées de manière. libérable en vis-à-vis des deux branches latérales (10, 11) du cadre de support (5) ; **par le fait qu'**un orifice (33) de post-chargement d'attaches, accessible depuis l'extrémité frontale de la branche de liage, est prévu sur la tête de liage ; et **par le fait qu'**une coulisse d'obturation (34) disposée sur cet orifice de post-chargement forme, en position fermée, une butée associée à des attaches stockées, avec précontrainte, dans l'une desdites branches latérales.

19. Dispositif selon la revendication 18, **caractérisé par le fait qu'**il est prévu une coulisse sollicitant les attaches stockées, en vue d'engendrer la précontrainte, ou bien un ressort de pression qui sollicite ladite coulisse et comporte un élément de traction ou de poussée, actionnable de préférence à la main, en vue de compenser ladite précontrainte.

20. Dispositif selon la revendication 18 ou 19, **caractérisé par le fait qu'**un vérin de levage, jouxtant de préférence la chambre de stockage, est prévu en tant qu'entraînement de la coulisse afin d'engendrer une précontrainte imposée aux attaches stockées.

21. Dispositif selon l'une des revendications 18 à 20, **caractérisé par le fait qu'**un vérin de levage, en particulier des vérins hydrauliques, sont respectivement prévus en tant qu'entraînement affecté au mouvement pivotant des deux branches de liage ; **par le fait que** ces vérins de levage sont agencés, de préférence, à peu près parallèlement à côté de la branche de liage considérée ; et **par le fait qu'**ils comportent des amortisseurs de positions extrêmes, notamment intégrés, hydrauliques de préférence.
